(19) **Europäisches Patentamt / European Patent Office / Office européen des brevets**

(11) **EP 2 738 148 B1**

(12) # EUROPEAN PATENT SPECIFICATION

(45) Date of publication and mention
of the grant of the patent:
**08.05.2019 Bulletin 2019/19**

(21) Application number: **12807383.0**

(22) Date of filing: **29.06.2012**

(51) Int Cl.:
*C04B 38/08* *(2006.01)*     *C04B 14/02* *(2006.01)*
*C04B 28/02* *(2006.01)*     *E01C 5/06* *(2006.01)*
*E01C 11/24* *(2006.01)*     *C04B 111/40* *(2006.01)*
*C04B 33/04* *(2006.01)*     *C04B 33/132* *(2006.01)*
*C04B 33/138* *(2006.01)*

(86) International application number:
**PCT/JP2012/066786**

(87) International publication number:
**WO 2013/005689 (10.01.2013 Gazette 2013/02)**

(54) **INTERLOCKING BLOCK**

VERKLINKUNGSBLOCK

BLOC À VERROUILLAGE RÉCIPROQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.07.2011 JP 2011147157**

(43) Date of publication of application:
**04.06.2014 Bulletin 2014/23**

(73) Proprietors:
• **KOMATSU MATERE Co., Ltd.**
  **Ishikawa (JP)**
• **The Nippon Road Co., Ltd.**
  **Minato-ku**
  **Tokyo 105-0004 (JP)**

(72) Inventors:
• **OKUYA, Teruhiro**
  **Nomi-city,**
  **Ishikawa 929-0124 (JP)**

• **KANEDA, Akihisa**
  **Nomi-city,**
  **Ishikawa 929-0124 (JP)**
• **SEKI, Kenji**
  **Tokyo 105-0004 (JP)**
• **NAKAHARA, Daiki**
  **Tokyo 105-0004 (JP)**
• **YAMAZAKI Fumio**
  **Kashima-gun,**
  **Ishikawa 929-1723 (JP)**

(74) Representative: **Lavoix**
  **Bayerstrasse 83**
  **80335 München (DE)**

(56) References cited:
**WO-A1-2010/106724     WO-A1-2012/036218
JP-A- 2004 299 965     JP-A- 2005 239 467
JP-A- 2007 230 827     JP-A- 2008 075 270
JP-A- 2011 093 759**

EP 2 738 148 B1

**Description**

TECHNICAL FIELD

The present invention relates to an interlocking block.
Priority is claimed on Japanese Patent Application No. 2011-147157, filed July 1, 2011.

BACKGROUND ART

Interlocking blocks are used as paving on roads, sidewalks, car parks and porches and the like. Interlocking blocks use a crushed material of gravel, tiles or glass or the like as an aggregate, and are generally produced by blending this aggregate with a cement. Interlocking blocks of this type have a structure that does not allow permeation of rainwater into the earth.
In recent years, localized flooding, desertification of large cities associated with a reduction in ground water, and air temperature increases caused by the heat island phenomenon have become serious problems. It is thought that these phenomena are caused by paved surfaces not allowing the permeation of rainwater into the earth, and the suppression of transpiration of water from within the earth.
In response to these problems, interlocking blocks have been proposed in which a plurality of holes have been formed in the interior of the blocks to provide water permeability and water retention properties. For example, a water-retentive concrete block containing porous fine particles formed from the incinerated ash of a papermaking sludge has been proposed, wherein the water-retentive block has a water retention capacity of 0.15 $g/cm^3$ or greater, a suction height of at least 70%, and a permeability coefficient of 0.01 cm/sec or greater (for example, see Patent Document 1). When the invention of Patent Document 1 is used as a paving block, satisfactory water transpiration can be achieved, the temperature of the road surface can be reduced, and a sidewalk or road having good drainage can be formed.

DOCUMENTS OF RELATED ART

PATENT DOCUMENTS

Patent Document 1: Japanese Unexamined Patent Application, First Publication No. 2007-145669
Documents WO 2012/036218 A1 and JP 2004 299965 A also disclose interlocking concrete blocks comprising a granulated product of a porous ceramic, and a cement.

SUMMARY OF THE INVENTION

PROBLEMS TO BE SOLVED BY THE INVENTION

However, in order to maintain strength, conventional interlocking blocks have a high density, and typically have a bulk specific gravity of 2 $g/cm^3$ or greater. Accordingly, conventional interlocking blocks are heavy, and there are therefore limits on the construction sites on which they can be used.
In addition, although the technology of Patent Document 1 is effective in preventing a reduction in ground water and countering the heat island phenomenon, it is not entirely satisfactory in coping with extreme heat.
Accordingly, an object of the present invention is to provide an interlocking block which alleviates construction site restrictions, and provides an excellent countermeasure to the heat island phenomenon even in extreme heat.

MEANS TO SOLVE THE PROBLEMS

As a result of intensive investigation, the inventors of the present invention discovered that by using a granulated product of a porous ceramic as an aggregate, and also ensuring a specific bending strength, a specific water retention capability and a specific bulk specific gravity, a lightweight interlocking block could be obtained which exhibited excellent water retention, an excellent ability to suction up water (water lifting properties), and an excellent ability to allow the transpiration of internal water (transpiration properties), and they were therefore able to complete the present invention.
In other words, one aspect of the interlocking block of the present invention according to claim 1 contains a granulated product of a porous ceramic and a cement, and has a bending strength of 3.0 MPa or greater, a water retention capability of 0.20 $g/cm^3$ or greater, and a bulk specific gravity of 1.7 $g/cm^3$ or less.
The porous ceramic is preferably obtained by firing a mixture containing at least one material selected from the group consisting of a slag, an organic sludge, diatomaceous earth and borosilicate glass, and a clay (in a separate aspect, it is preferable that "the porous ceramic includes a mixture containing at least one material selected from the group consisting of a slag, an organic sludge, diatomaceous earth and borosilicate glass, and a clay, wherein the porous ceramic is obtained by firing the mixture"), and it is more preferable that the mixture contains a slag, an organic sludge and a clay.

EFFECTS OF THE INVENTION

According to one aspect of the interlocking block of the present invention, construction site restrictions can be alleviated, and an excellent countermeasure to the heat island phenomenon is obtained even in extreme heat.

EMBODIMENTS FOR CARRYING OUT THE INVENTION

One aspect of the interlocking block of the present invention contains a granulated product of a porous ceramic (hereafter also referred to as a "granular ceramic") and a cement.

The granular ceramic is added as an aggregate.

The term "granular" means a particle size of 5 mm or less, namely a size that can pass through a sieve having a mesh size of 5 mm. The particle size of the granular ceramic is, for example, preferably greater than 0.5 mm but not more than 5 mm, and is more preferably greater than 1 mm but not more than 5 mm. If the particle size exceeds the above upper limit, then there is a possibility that the strength of the obtained interlocking block may be insufficient. If the particle size is less than the lower limit, then there is a possibility that the water retention, water lifting or transpiration properties of the obtained interlocking block may deteriorate, or the bulk specific gravity may increase.

The particle size refers to a value measured by sieving, and for example, a granulated product having a particle size greater than 0.5 mm but not more than 5 mm passes through a sieve having a mesh size of 5 mm, but cannot pass through a sieve having a mesh size of 0.5 mm.

Further, the interlocking block may include a granular ceramic having a particle size outside of the aforementioned range, provided this does not impair the object of the present invention.

The granular ceramic has continuous holes formed therein, wherein at least one of pores of the micrometer order and pores of the millimeter order are mutually interconnected. By using a granular ceramic in which these types of continuous holes are formed, the interlocking block is able to exhibit superior water retention and water lifting properties, as well as excellent water permeability. Further, the connecting holes preferably penetrate right through the granular ceramic.

The expression "pores of the micrometer order" means pores in which the maximum diameter (also referred to as simply the pore size) is within a range from 1 to 1,000 $\mu$m, wherein the pore size is a value measured by observation of a cut cross section of the granular ceramic using an electron microscope. The expression "pores of the millimeter order" means pores for which the pore size is greater than 1 mm but not more than 5 mm, wherein the pore size is a value measured by cutting the granular ceramic and measuring the pores formed within the cut cross section using a scale. The pore size of the pores can be adjusted by appropriate combination of the types of raw materials and the firing conditions.

If the saturated water content of the granular ceramic is too low, then satisfactory water retention properties are unobtainable, whereas if the saturated water content is too high, then there is a possibility that the strength of the interlocking block may be inadequate. As a result, the lower limit for the saturated water content of the granular ceramic is preferably 5% by mass or greater, more preferably 10% by mass or greater, still more preferably 15% by mass or greater, particularly preferably 30% by mass or greater, and most preferably 40% by mass or greater. The upper limit is preferably 80% by mass or less, and more preferably 70% by mass or less. The upper limit and the lower limit may be combined as desired. More specifically, the saturated water content is preferably 5% by mass or greater, more preferably 10% by mass or greater, still more preferably from 15 to 80% by mass, particularly preferably from 30 to 80% by mass, and most preferably from 40 to 70% by mass.

The saturated water content is a value determined by immersing the sample in water for 60 minutes, removing the sample from the water, bringing the sample into contact with a cloth to remove surface water droplets, immediately measuring the mass (water saturated state mass), and then calculating the water content using formula (1) shown below.

$$\text{Saturated water content (\% by mass)} = [(\underline{\text{water saturated state}} \text{ mass} - \text{absolute dry mass}) / \text{absolute dry mass}] \times 100 \qquad ...(1)$$

The bulk specific gravity of the granular ceramic is, for example, preferably 1 g/cm$^3$ or less, more preferably from 0.2 to 0.95 g/cm$^3$, and still more preferably from 0.4 to 0.9 g/cm$^3$. The upper limit and the lower limit may be combined as desired. If the bulk specific gravity exceeds the above upper limit, then a large amount of the granular ceramic must be added to reduce the bulk specific gravity of the interlocking block, and there is a possibility that this may result in a deterioration in the strength of the interlocking block. If the bulk specific gravity is less than the lower limit, then there is a possibility that the strength of the interlocking block may be inadequate.

One example of a method of producing the granular ceramic is a method that includes mixing the raw materials to obtain a mixture (hereafter also referred to as simply "the mixture") (mixing step), molding the mixture to form a molded body (molding step), and firing the molded body to obtain a ceramic sintered compact (firing step).

The mixing step is a step of mixing the raw materials, including the clay, to obtain a mixture.

The mixture preferably contains at least one material selected from the group consisting of a slag, an organic sludge, diatomaceous earth and borosilicate glass, and a clay, and more preferably contains a slag, an organic sludge and a clay. By using a slag, large pores of the millimeter order can be formed, whereas by using diatomaceous earth, pores of the micrometer order can be formed. In addition, by using an organic sludge, pores of the micrometer order and even smaller pores can be formed. From the viewpoints of improving the water retention capability and reducing the bulk specific gravity, a mixture containing a slag, an organic sludge and a clay, or a mixture containing a slag, diatomaceous earth and a clay is preferable, and from the viewpoints of improving the bending strength and improving the water retention capability, a mixture of an organic sludge, diatomaceous earth and a clay is preferable. In order to achieve a good balance of bending strength, water retention capability and bulk specific gravity, a mixture containing a slag, an organic sludge, diatomaceous earth and a clay is preferable. The granular ceramic obtained upon firing of this type of mixture has continuous holes and also has a plurality of pores.

There are no particular limitations on the slag, and examples include glass-like slags such as a blast furnace slag generated during metal refining, a municipal waste molten slag generated during melting of municipal waste, a sewage sludge molten slag generated during melting of sewage sludge, and a cast iron slag generated during casting of ductile cast iron or the like. Among these, a cast iron slag is preferable, as it tends to have a stable composition, meaning a stable foamed state can be obtained, and also has a foaming rate that is approximately 1.5 to 2 times that of the other slags. By using a cast iron slag, millimeter order pores having a flat shape can be formed, thereby enhancing the water permeability and the water retention properties.

The amount of the slag within the blend (mixture) can be determined with due consideration of the moldability of the mixture, but the lower limit is preferably 30% by mass or greater, and more preferably 40% by mass or greater. The upper limit is preferably 80% by mass or less, more preferably 70% by mass or less, and still more preferably 60% by mass or less. The upper limit and the lower limit may be combined as desired. More specifically, for example, the amount of the slag is preferably not more than 80% by mass, more preferably from 30 to 70% by mass, and still more preferably from 40 to 60% by mass. Provided the amount of slag satisfies the above range, the mixture can be molded smoothly with no loss in the moldability, and the bulk specific gravity of the granular ceramic can be kept within the preferred range.

The organic sludge is a sludge containing organic matter as the main component. Any such sludge can be used as the organic sludge, and an activated sludge derived from sewage or wastewater treatment from a factory or the like is particularly preferable. An activated sludge is discharged from a wastewater treatment facility using an activated sludge method, and passes through a flocculation step and a dewatering step. By using this type of organic sludge, micrometer order pores can be formed efficiently, and nanometer order pores can also be formed. By forming nanometer order pores, a granular ceramic having a low bulk specific gravity can be obtained, and the water retention properties of the interlocking block can be further enhanced. Moreover, an activated sludge derived from a wastewater treatment, which has typically been considered a waste product, can be reused as a raw material. A nanometer order pore means a pore having a pore size of at least 1 nm but less than 1,000 nm, wherein the pore size is a value measured by observation of a cut cross section of the granular ceramic using an electron microscope.

The water content of the organic sludge is for example preferably within a range from 60 to 90% by mass, and more preferably from 65 to 85% by mass. Provided the water content satisfies this range, a uniform mixture can be obtained, and favorable moldability can be more easily maintained.

There are no particular limitations on the amount of organic matter within the organic sludge, and for example, the amount of organic matter (the organic content) within the solid fraction of the organic sludge is preferably 70% by mass or greater, and more preferably 80% by mass or greater. The upper limit for the amount of organic matter within the solid fraction of the organic sludge may be 100% by mass. The larger the organic content, the more easily micrometer order pores can be formed, and nanometer order pores can also be formed. The organic content is a value obtained by measuring the ash content (% by mass) of the dried sludge at a carbonization temperature of 700°C in accordance with JIS M 8812-1993, and is calculated using formula (2) shown below.

$$\text{Organic content (\% by mass)} = 100 \text{ (\% by mass)} - \text{ash content (\% by mass)} \quad ...(2)$$

The average particle size of the organic sludge is preferably within a range from 1 to 5 $\mu$m, and more preferably

from 1 to 3 μm. The smaller the average particle size, the more easily micrometer order pores can be formed, and nanometer order pores can also be formed. The average particle size refers to the volume-based median diameter (the diameter at 50% by volume) measured using a particle size distribution analyzer (LA-920, manufactured by Horiba, Ltd.).

The amount of the organic sludge within the mixture can be determined with due consideration of the moldability and the like of the mixture, and the lower limit is preferably 1% by mass or greater, and more preferably 5% by mass or greater. The upper limit is preferably 60% by mass or less, more preferably 40% by mass or less, still more preferably 30% by mass or less, and particularly preferably 20% by mass or less. The upper limit and the lower limit may be combined as desired. More specifically, for example, the amount is preferably within a range from 1 to 60% by mass, more preferably from 5 to 30% by mass, and still more preferably from 5 to 20% by mass. Provided the amount satisfies this range, the mixture exhibits appropriate fluidity and plasticity, the moldability improves, and the mixture can be molded smoothly without blocking up the molding apparatus.

Diatomaceous earth is a sediment formed from the remains of diatoms, and is a porous material having pores of the micrometer order. By using diatomaceous earth, fine pores derived from the diatomaceous earth can be formed in the granular ceramic.

There are no particular limitations on the diatomaceous earth, and the same materials as those used conventionally in insulating firebricks and filter media and the like can be used. For example, there is no need to purify the diatomaceous earth by separating clay minerals (such as montmorillonite), quartz or feldspar or the like, and the amount of the diatomaceous earth added to the mixture may simply be adjusted in recognition of the amounts of these materials.

There are no particular limitations on the water content of the diatomaceous earth, and for example, the water content in a natural dry state is preferably from 20 to 60% by mass, more preferably from 30 to 50% by mass, and still more preferably from 35 to 45% by mass.

Provided the water content is within the above range, a mixture having good moldability can be obtained by removing coarse particles within the impurities during mixing, with due recognition of the water content.

The water content describes a value obtained by a weight loss on drying method, by using an infrared aquameter having the specifications described below to dry the sample (200°C, 12 minutes), and then determining the water content from formula (3) shown below.

<Specifications>

Measurement method: weight loss on drying (measurement of mass upon drying under heat)
Minimum value: water content of 0.1% by mass
Measurement range: water content 0.0 to 100% by mass
Drying temperature: 0 to 200°C
Measurement accuracy: for a sample mass of 5 g or greater, water content ±0.1% by mass
Heat source: infrared lamp, 185 W

$$\text{Water content (\% by mass)} = [(m_1-m_2) / (m_1-m_0)] \times 100 \qquad ...(3)$$

$m_1$: total mass (g) of mass of container prior to drying and mass of sample prior to drying, $m_2$: total mass (g) of mass of container after drying and mass of sample after drying, $m_0$: mass (g) of container after drying

The amount of the diatomaceous earth within the mixture may be determined with due consideration of the saturated water content and the strength and the like required for the granular ceramic, and for example, is preferably not more than 55% by mass, more preferably from 1 to 55% by mass, and still more preferably from 1 to 45% by mass. Provided the amount is not more than the above upper limit, the moldability of the mixture is favorable, whereas provided the amount is at least as large as the lower limit, a granular ceramic having the desired saturated water content, and a granular ceramic having the desired strength can be obtained more easily.

Borosilicate glass is an oxide glass containing boron and silicon as the main components. An example of a borosilicate glass is the product AN100 (product name, an alkali-free borosilicate glass, manufactured by Asahi Glass Co., Ltd.).

The borosilicate glass preferably has a high melting temperature. The melting temperature of the borosilicate glass is preferably 900°C or higher, more preferably 1,000°C or higher, and still more preferably 1,200°C or higher. Provided the melting temperature is at least as high as the above lower limit, the particles of the borosilicate glass can undergo partial melting during the firing step for the ceramic sintered compact, with particles of the borosilicate glass then fusing together and functioning as a binder for the clay and diatomaceous earth and the like. In addition, a higher melting temperature can improve the strength of the granular ceramic. Further, the melting temperature of the borosilicate glass is preferably not more than 1,800°C, and more preferably 1,600°C or lower.

The particle size of the borosilicate glass is preferably within a range from 0.3 to 5 mm. If the particle size is less than 0.3 mm, then formation of pores in the granular ceramic tends to be unsatisfactory, and the bulk specific gravity tends to increase. If the formation of pores is unsatisfactory, then the water retention, water lifting and transpiration properties tend to deteriorate, water permeability becomes more difficult to achieve, and there is a possibility that a granular ceramic of the desired bulk specific gravity may be unobtainable. If the particle size exceeds 5 mm, then the moldability deteriorates, and there is a possibility that the metal fitting at the extrusion port may be damaged during molding.

The amount of the borosilicate glass within the mixture, relative to 100 parts by mass of the total of all the raw materials other than the borosilicate glass, is preferably from 10 to 50 parts by mass, more preferably from 10 to 40 parts by mass, and still more preferably from 15 to 40 parts by mass. If the amount of the borosilicate glass is less than the above lower limit, then there is a possibility that the strength of the granular ceramic may not be able to be improved satisfactorily, whereas if the amount exceeds the upper limit, there is a possibility that the moldability of the mixture may deteriorate.

The clay in the present invention describes a mineral material that exhibits clay-like properties and is widely used as a ceramic raw material, but is a material other than diatomaceous earth.

The clay may use the types of known clays used in conventional ceramic sintered compacts, and is typically composed of a mineral composition containing quartz, feldspar and clay-based minerals, wherein the constituent minerals are preferably mainly kaolinite, but also include halloysite, montmorillonite, illite, bentonite and pyrophyllite. Among these minerals, from the viewpoints of suppressing crack development during sintering, and preventing damage to the granular ceramic, the clay preferably includes coarse particles of quartz having a particle size of 500 $\mu$m or greater. Further, these coarse particles of quartz preferably have a particle size of 5 mm or less. Examples of this type of clay include gairome clay and the like. A single type of clay may be added, or an appropriate combination of two or more types may be added.

The amount of the clay within the mixture can be determined with due consideration of the strength and moldability and the like required of the granular ceramic, but the lower limit is preferably at least 5% by mass, and more preferably 10% by mass or greater. The upper limit is preferably not more than 45% by mass, and more preferably 40% by mass or less. The upper limit and the lower limit may be combined as desired. More specifically, the amount of the clay is preferably within a range from 5 to 45% by mass, and more preferably from 10 to 40% by mass. Provided the amount satisfies this range, the mixture can be molded smoothly with no loss in the moldability, and the strength of the granular ceramic is also satisfactory.

The mixture may also include other optional components, provided they do not impair the effects of the present invention. Examples of these optional components include naphthalene-based fluidizers such as Mighty 2000WH (product name, manufactured by Kao Corporation), melamine-based fluidizers such as Melment F-10 (product name, manufactured by Showa Denko K.K.), polycarboxylic acid-based fluidizers such as Darex Super 100pH (product name, manufactured by Grace Chemicals), antibacterial agents such as silver, copper and zinc, adsorbents such as zeolite and apatite, and metallic aluminum.

When an optional component is added to the mixture, the amount added of the optional component is preferably set, for example, within a range from 5 to 10% by mass.

In addition, when an organic sludge is added in a suitable blend ratio in the mixing step described below, water need not necessarily be added during the mixing step, but an appropriate amount of water may be added for purposes such as regulating the fluidity of the mixture.

There are no particular limitations on the mixing device used in the mixing step, and conventional mixing devices can be used.

Examples of the mixing device include kneaders such as a Mix Muller (manufactured by Toshin Kogyo Co., Ltd.), as well as a Kneader (manufactured by Moriyama Company Ltd.) and a Mixer (manufactured by Nitto Kagaku Co., Ltd.).

The mixing time during the mixing step can be determined with due consideration of the blend ratio of the raw materials and the fluidity and the like of the mixture, and a mixing time that enables the mixture to adopt a plastic state is preferable. For example, the mixing time is preferably set within a range from 15 to 45 minutes, and is more preferably from 25 to 35 minutes.

There are no particular limitations on the temperature during the mixing step, and the temperature can be determined with due consideration of the blend ratio of the raw materials and the water content and the like. For example, the temperature is preferably set within a range from 40 to 80°C, and more preferably from 50 to 60°C.

The molding step is a step of molding the mixture obtained in the mixing step into an arbitrary shape.

A conventional molding method can be used as the molding method, and the method may be determined with due consideration of the physical properties of the mixture and the desired shape for the molded body. Examples of the molding method include a method in which a molding machine is used to obtain a plate-shaped, granular or column-shaped molded body, a method in which the mixture is packed into a mold having an arbitrary shape, thus obtaining a molded body, and a method in which the mixture is extruded, drawn or rolled, and subsequently cut to the desired dimensions.

Examples of the molding machine include a vacuum soil kneading and molding machine, a flat plate press molding machine, and a flat plate extrusion molding machine, and of these, a vacuum soil kneading and molding machine is preferable.

The firing step is a step of drying the molded body obtained in the molding step (drying operation), and then firing the dried molded body (firing operation), thereby sintering the diatomaceous earth and the clay and the like to obtain a ceramic sintered compact.

There are no particular limitations on the drying operation, and conventional methods may be used. For example, the molded body may be dried naturally, or dried by treatment for an arbitrary time in a hot air drying oven at 50 to 220°C. Although there are no particular limitations on the water content of the molded body following drying, the water content is preferably less than 5% by mass, and more preferably less than 1% by mass. The lower limit for the water content may be 0% by mass. The upper limit and the lower limit may be combined as desired.

There are no particular limitations on the firing operation, and conventional methods may be used. For example, a method may be used in which baking is performed at an arbitrary temperature using a continuous sintering furnace such as a roller hearth kiln or a batch sintering furnace such as a shuttle kiln. Of these, from the viewpoint of productivity, a continuous sintering furnace is preferably used for the firing operation.

The firing temperature can be determined in accordance with the physical properties and the like of the mixture, but is typically within a range from 900 to 1,200°C, and preferably from 950 to 1,200°C. Provided the firing temperature is at least as high as the above lower limit, odorous components derived from the organic sludge are thermally decomposed and eliminated, and the majority of the organic matter within the organic sludge is volatilized, leading to a weight reduction. If the firing temperature exceeds the above upper limit, then vitrification of the entire structure of the ceramic sintered compact tends to occur, and there is a possibility of damage to the molded body and blocking of the pores.

A crushing step may be provided after the firing step if required. In the crushing step, the ceramic sintered compact obtained in the firing step is crushed using a hammer mill or the like (crushing operation), and the thus obtained crushed product is sieved to obtain the desired particle size (sieving operation). In those cases where the settings for the conditions during the crushing operation yield a granular ceramic having a particle size within the desired range, the sieving operation need not necessarily be performed.

Examples of the granular ceramic include the ceramic sintered compacts disclosed in Japanese Unexamined Patent Application, First Publication No. 2005-239467 and the porous ceramic sintered compacts disclosed in International Patent Publication No. 10/106724 pamphlet, as well as products obtained by crushing these granular ceramics as necessary. Additional examples include the porous ceramic sintered compact Greenbiz (a registered trademark, manufactured by Komatsu Seiren Co., Ltd.) and, if necessary, crushed products thereof.

The amount of the granular ceramic within the interlocking block can be determined with due consideration of the application and the like, and for example, for an interlocking block of 100 g, the lower limit for the amount of the granular ceramic is at least 10 g, preferably 30 g or greater, more preferably 40 g or greater, and particularly preferably 50 g or greater. The upper limit is not more than 95 g, and preferably 90 g or less. The upper limit and the lower limit may be combined as desired. More specifically, the amount of the granular ceramic is within a range from 10 to 95 g, preferably from 30 to 90 g, more preferably from 40 to 90 g, and particularly preferably from 50 to 90 g. If the amount is less than the above lower limit, then there is a possibility that the water retention, water lifting or transpiration properties of the interlocking block may be unsatisfactory, or that water permeability may become difficult to obtain, whereas if the amount exceeds the upper limit, then there is a possibility that the strength of the interlocking block may be inadequate.

Examples of the cement include the known types of cements used in the production of conventional interlocking blocks, including ordinary Portland cement, high early strength Portland cement, blast furnace cement, and special cements.

Besides the granular ceramic and the cement, the interlocking block may include an aggregate other than the granular ceramic (optional aggregate), a pigment or a fluidizer, provided these other components do not impair the effects of the present invention.

Examples of the optional aggregate include crushed tiles, gravel and crushed glass.

One aspect of the interlocking block of the present invention may be either a single layer structure having an arbitrary composition, or a multilayer structure in which an arbitrary composition and another arbitrary composition are stacked together in layers. An example of a multilayer structure is a two-layer structure having a base layer containing no pigment and a surface layer containing a pigment. Further, multilayer structures having layers containing different amounts or types of the granular ceramic stacked alternately are also possible.

The bending strength of the interlocking block is at least 3.0 MPa, preferably 4.5 MPa or higher, more preferably 5.0 MPa or higher, and still more preferably 6.5 MPa or higher. The upper limit is not more than 10.0 MPa. The upper limit and the lower limit may be combined as desired.

Provided the bending strength is at least 3.0 MPa, the interlocking block has sufficient strength for use as a paving material for pavements and car parks and the like, and if the bending strength is 5.0 MPa or greater, the interlocking block has sufficient strength for use as a paving material for roadways. Although there are no particular limitations on the upper limit for the bending strength, if the density is increased too much in an attempt to increase the bending strength, then there is a possibility that the water retention and water lifting properties may deteriorate.

The bending strength of the interlocking block can be adjusted by appropriate combination, within the mortar described below, of the type and amount of the granular ceramic, and the type of the cement and the like.

The water retention capability of the interlocking block is at least 0.20 g/cm$^3$, preferably 0.25 g/cm$^3$ or greater, more preferably 0.30 g/cm$^3$ or greater, and still more preferably 0.35 g/cm$^3$ or greater. Further, the upper limit is preferably not more than 0.80 g/cm$^3$, and more preferably 0.50 g/cm$^3$ or less. The upper limit and the lower limit may be combined as desired. Provided the water retention capability is at least 0.20 g/cm$^3$, retained water can be vaporized during extreme heat, meaning latent heat can be released, thereby suppressing increases in the temperature of the paved surface. From the viewpoint of reducing the temperature of the paved surface, a higher water retention is preferable, but if the water retention is too high, then there is a possibility that the bending strength may deteriorate.

The water retention capability is represented by the water retention capacity measured in accordance with the water retention test for interlocking blocks (JIPEA-TM-7) prescribed by the Japan Interlocking Block Pavement Engineering Association (JIPEA).

The water retention capability of the interlocking block can be adjusted by appropriate combination, within the mortar described below, of the type and amount of the granular ceramic, and the type of the cement and the like.

The bulk specific gravity of the interlocking block is not more than 1.7 g/cm$^3$, preferably 1.6 g/cm$^3$ or less, and more preferably 1.5 g/cm$^3$ or less. Further, the lower limit is preferably at least 1.1 g/cm$^3$. The upper limit and the lower limit may be combined as desired. Provided the bulk specific gravity is 1.7 g/cm$^3$ or less, the dead load can be reduced, and construction site restrictions can be reduced, meaning the interlocking block can be used on rooftops and bridge surfaces, which have conventionally been deemed unsuitable for interlocking block application. In addition, the burden on laborers during construction is reduced, and transport costs are also reduced. A lower bulk specific gravity is preferable, but if the bulk specific gravity is reduced too far, then there is a possibility that the water lifting properties and the bending strength may deteriorate.

The bulk specific gravity of the interlocking block can be adjusted by appropriate combination, within the mortar described below, of the type and amount of the granular ceramic, and the type of the cement and the like.

The suction height of the interlocking block is preferably at least 30%, more preferably 40% or greater, still more preferably 80% or greater, particularly preferably 85% or greater, and most preferably 90% or greater. The upper limit may be 100%. The upper limit and the lower limit may be combined as desired. Provided the suction height is 80% or greater, even in those cases where rain does not fall for an extended period, water that exists beneath the interlocking block (for example, within the ground) can be suctioned up, exhibit an effect that suppresses increases in the temperature of the paved surface.

The suction height of the interlocking block can be adjusted by appropriate combination, within the mortar described below, of the type and amount of the granular ceramic, and the type of the cement and the like.

The interlocking block may also have water permeability. If the block has water permeability, rainwater can permeate rapidly into the ground. The expression "has water permeability" means that if the target member is in a water saturated state, then additional water added from one surface of the water saturated state member can be discharged from the other surface.

The degree of water permeability of the interlocking block is represented by the permeability coefficient measured in accordance with JIS A5371 (Precast Unreinforced Concrete Products, appendix 2 (prescription) Paving-Boundary Blocks, recommended specifications 2-3: Interlocking blocks). The permeability coefficient of the interlocking block is preferably 0.01 cm/s or greater.

In one aspect of the method of producing the interlocking block of the present invention, the granular ceramic, the cement, water, and any optional components which may be required are mixed together to form a mortar (mortar preparation step), and this mortar is then molded into an arbitrary shape and cured (curing step).

In the mortar preparation step, it is preferable that the blend ratio (mass ratio) between the granular ceramic and the cement within the mortar is within a range from granular ceramic : cement = 30:70 to 95:5. If the blend ratio of the granular ceramic is less than the lower limit of the above range, then there is a possibility that the water retention, water lifting and transpiration properties may deteriorate, and water permeability may become more difficult to achieve, whereas if the blend ratio of the granular ceramic exceeds the upper limit, there is a possibility that the strength may deteriorate.

The amount of water in the mortar may be set appropriately with due consideration of the types and amounts of the aggregate and the cement.

The curing step can employ a conventionally known method, and examples include a method in which the mortar is placed in a mold having an arbitrary shape, and is then left to stand for a period of several hours to several days to cure, and a zero slump compression molding method in which the mortar is placed in a mold having an arbitrary shape, and is then pressed and cured. Among these methods, zero slump compression molding is preferable. When the zero slump compression molding method is used, the amount of water within the mortar must be within a range that enables the mortar to adopt a zero slump state.

According to one aspect of the interlocking block of the present invention, by incorporating the granular ceramic, the interlocking block is imparted with water retention, water lifting and transpiration properties, wherein transpiration of the retained water suppresses any increase in the temperature of the paved surface, and water in contact with the interlocking block can be efficiently suctioned up and transpired, meaning increases in the temperature of the paved surface can be suppressed over long periods, and the heat island phenomenon can be prevented even in extreme heat.

One aspect of the interlocking block of the present invention has a bending strength of 3.0 MPa or greater, and therefore has sufficient strength for use as a paving material.

In addition, because the water retention capability is 0.20 g/cm$^3$ or greater, a large amount of water can be retained, and transpiration of the retained water can prevent the heat island phenomenon.

Moreover, because the bulk specific gravity is 1.7 g/cm$^3$ or less, construction site restrictions can be alleviated.

EXAMPLES

The present invention is described below in further detail based on a series of examples, but the present invention is in no way limited by the following examples.

(Raw Materials Used)

The raw materials used in the examples were as follows.

<Organic Sludge>

An activated sludge discharged by an activated sludge method from the wastewater treatment facility of a dye factory (Komatsu Seiren Co., Ltd., Mikawa factory), and subsequently passed through a flocculation step and a dewatering step. The organic matter content (of the solid fraction) of this activated sludge was 83% by mass, and the water content was 70% by mass.

<Clay>

Gairome clay (from Gifu prefecture or Aichi prefecture).

<Diatomaceous Earth>

A powdered diatomaceous earth having a water content of 5% by mass, used as a raw material for firebricks manufactured in the Noto district.

<Cast Iron Slag>

A ductile cast iron slag containing $SiO_2$, $Al_2O_3$, CaO, $Fe_2O_3$, FeO, MgO, MnO, $K_2O$ and $Na_2O$ as the main components.

<Tile Particles>

Particles prepared by crushing tiles and passing the crushed material through a sieve with a mesh size of 5 mm.

<Cement>

Ordinary Portland cement, manufactured by Ube-Mitsubishi Cement Corporation.

<Granular Ceramic>

A granular ceramic produced using the production method described below.

Ten parts by mass of the organic sludge, 55 parts by mass of the cast iron slag, 30 parts by mass of the clay and 5 parts by mass of the diatomaceous earth were mixed in a Mix Muller (manufactured by Toshin Kogyo Co., Ltd.)

to prepare a mixture, and this mixture was molded into a plate-shaped molded body using a Vacuum Soil Kneading and Molding Machine (manufactured by Takahama Industry Co., Ltd.). The thus obtained molded body was fired at 1,000°C to obtain a ceramic sintered compact. The obtained ceramic sintered compact was crushed and passed through a sieve having a mesh size of 5 mm, thus obtaining a granular ceramic.

The thus obtained granular ceramic had continuous holes formed therein, and had a bulk specific gravity of 0.75 g/cm$^3$ and a saturated water content of 50% by mass. The bulk specific gravity and the saturated water content values represent the averages of the results obtained by measuring 100 random particles.

(Example 1)

A zero slump mortar was prepared by mixing 66 parts by mass of the granular ceramic, 20 parts by mass of the cement and 14 parts by mass of water. This mortar was packed into a mold, vibration pressing was performed (2 tons of pressure) and the mortar was cured. The cured product was removed from the mold, and then left to cure for one week, yielding an interlocking block with a single layer structure having dimensions of length: 100 mm, width: 200 mm, and thickness: 60 mm. The thus obtained interlocking block was evaluated for maximum load, bending strength, normal temperature mass, absolute dry mass, wet mass, bulk specific gravity, suction mass, suction height, and water retention capability. These results are shown in Table 1.

(Example 2)

A zero slump first mortar was obtained by mixing 33.6 parts by mass of the granular ceramic, 33.6 parts by mass of the tile particles, 20 parts by mass of the cement and 12.4 parts by mass of water. Further, a zero slump second mortar was obtained by mixing 64 parts by mass of the granular ceramic, 21 parts by mass of the cement and 15 parts by mass of water. The first mortar was packed into a mold, the second mortar was then packed into the mold, vibration pressing was performed (2 tons of pressure) and the mortars were cured. The cured product was removed from the mold, and then left to cure for one week, yielding an interlocking block having dimensions of length: 100 mm, width: 200 mm, and thickness: 60 mm. This interlocking block had a two-layer structure composed of a base layer (thickness: 55 mm) formed from the cured first mortar, and a surface layer (thickness: 5 mm) formed from the cured second mortar. The thus obtained interlocking block was evaluated for maximum load, bending strength, normal temperature mass, absolute dry mass, wet mass, bulk specific gravity, suction mass, suction height, and water retention capability. These results are shown in Table 1.

(Example 3)

A zero slump mortar was obtained by mixing 33.5 parts by mass of the granular ceramic, 33.5 parts by mass of the tile particles, 20 parts by mass of the cement and 13 parts by mass of water. This mortar was packed into a mold, vibration pressing was performed (2 tons of pressure) and the mortar was cured. The cured product was removed from the mold, and then left to cure for one week, yielding an interlocking block with a single layer structure having dimensions of length: 100 mm, width: 200 mm, and thickness: 60 mm. The thus obtained interlocking block was evaluated for maximum load, bending strength, normal temperature mass, absolute dry mass, wet mass, bulk specific gravity, suction mass, suction height, and water retention capability. These results are shown in Table 1.

(Reference Example 1)

Using a sample (N) number of N=1, a water-permeable interlocking block (Twin-Walk T, manufactured by Hokuriku Block K.K.) was evaluated for bending strength, absolute dry mass, wet mass, bulk specific gravity, suction mass, suction height, and water retention capability. These results are shown in Table 1. The interlocking block of this example had been cured for at least one month.

(Evaluation Methods)

<Existence of Continuous Holes>

Each of the obtained granular ceramics was immersed in water, and following thorough water absorption, was either cut or crushed, and the cross section was inspected. If water was distributed and retained evenly across the entire cross section, then a judgment was made that continuous holes had been formed in the granular ceramic, whereas if the water had not spread across the entire cross section, then a judgment was made that either the pores were independent and did not form continuous holes, or the degree of formation of the continuous holes was inadequate.

<Maximum Load, Bending Strength>

Using a Universal Tester (manufactured by Shimadzu Corporation), the maximum load was measured in accordance with JIS A5371 (Precast Unreinforced Concrete Products, appendix 2 (prescription) Paving-Boundary Blocks, recommended specifications 2-3: Interlocking blocks). The load span was set to 80% of the length of the sample, and the loading rate was set so that the increase in edge stress intensity was 1.0 MPa. The sample (N) number was set to N=10, and the average value was determined.

Further, the bending strength was calculated from the measured maximum load using formula (4) shown below.

$$\text{Bending Strength (MPa)} = [\{3 \times \text{span (mm)}\} \div \{2 \times \text{sample width (mm)} \times \text{sample}$$

$$\text{thickness (mm)} \times \text{sample thickness (mm)}\}] \times \text{maximum load (N)} \quad ...(4)$$

<Normal Temperature Mass>

The sample was cured in a curing chamber at 600 degree-hours, and the mass of the sample measured immediately following curing was recorded as the normal temperature mass.

The sample (N) number was set to N=10, and the average value was determined.

<Bulk Specific Gravity>

The external dimensions of the sample were measured with calipers, and the sample volume was determined. The same sample was converted to an absolute dry state, the mass (absolute dry mass) was measured using an electronic balance, and the bulk specific gravity was calculated using formula (5) shown below. The sample (N) number was set to N=10, and the average value was determined.

$$\text{Bulk specific gravity (g/cm}^3) = [\text{absolute dry mass (g)}] / [\text{volume (cm}^3)] \quad ...(5)$$

<Suction Mass, Suction Height>

The suction mass after 30 minutes was measured in accordance with the water absorption test for interlocking blocks (JIPEA-TM-8) prescribed by the JIPEA.

The sample (N) number was set to N=10, and the average value was determined.

Further, the suction height was calculated from the measured suction mass using formula (6) shown below.

$$\text{Suction height (\%)} = \{\text{suction mass (g) after 30 minutes} - \text{absolute dry mass (g)}\} \div$$

$$\{\text{wet mass (g)} - \text{absolute dry mass (g)}\} \times 100 \quad ...(6)$$

<Water Retention Capability>

Measurement was performed in accordance with the water retention test for interlocking blocks (JIPEA-TM-7) prescribed by the JIPEA, and the water retention capability was then calculated using formula (7) shown below. The sample (N) number was set to N=10, and the average value was determined.

$$\text{Water retention capability (g/cm}^3) = \{\text{wet mass (g)} - \text{absolute dry mass (g)}\} \div$$

$$\text{sample volume (cm}^3) \quad ...(7)$$

[Table 1]

| | | | Example 1 | Example 2 | Example 3 | Reference Example 1 |
|---|---|---|---|---|---|---|
| Composition | | Structure | single layer | two layers | single layer | – |
| | Base layer | Granular ceramic (parts by mass) | 66 | 33.6 | 33.5 | – |
| | | Cement (parts by mass) | 20 | 20 | 20 | – |
| | | Tile particles (parts by mass) | – | 33.6 | 33.5 | – |
| | Surface layer | Granular ceramic (parts by mass) | – | 64 | – | – |
| | | Cement (parts by mass) | – | 21 | – | – |
| Results | | Maximum load (N) | 4900 | 6400 | 7400 | – |
| | | Bending strength (MPa) | 3.81 | 4.97 | 5.29 | 6.77 |
| | | Normal temperature mass (g) | 1610 | 1740 | 1780 | – |
| | | Absolute dry mass (g) | 1595 | 1710 | 1750 | 2090 |
| | | Wet mass (g) | 1895 | 1980 | 2010 | 2286 |
| | | Bulk specific gravity (g/cm$^3$) | 1.3 | 1.4 | 1.5 | 1.74 |
| | | Suction mass (g) | 1880 | 1950 | 1980 | 2236 |
| | | Suction height (%) | 95 | 89 | 88 | 74 |
| | | Water retention capability (g/cm$^3$) | 0.3 | 0.25 | 0.23 | 0.16 |

As illustrated in Table 1, Examples 1 to 3 which represent applications of one aspect of the present invention displayed a suction height of 88% or greater, indicating that they are capable of efficiently suctioning water up from the ground. As a result, it was evident that the interlocking block representing one aspect of the present invention acted as an excellent countermeasure to the heat island phenomenon even in extreme heat.

In addition, Examples 1 to 3 which represent applications of one aspect of the present invention exhibited a water retention capability of 0.23 g/cm$^3$ or greater, and therefore it was evident that they were able to efficiently retain rainwater.

Moreover, Examples 1 to 3 which represent applications of one aspect of the present invention exhibited a bulk specific gravity of 1.3 to 1.5 g/cm$^3$, and a bending strength of 3.81 MPa or greater, and therefore it was evident that they had sufficient strength for use as paving materials, and were able to alleviate construction site restrictions.

INDUSTRIAL APPLICABILITY

The interlocking block of the present invention enables construction site restrictions to be alleviated, and acts as an excellent countermeasure to the heat island phenomenon even in extreme heat, and is therefore extremely useful industrially.

**Claims**

1. An interlocking block comprising a granulated product of a porous ceramic and a cement, wherein:

   said granulated product of a porous ceramic has connecting holes formed therein, wherein at least one of pores of the micrometer order and pores of the millimeter order are mutually interconnected,
   the particle size of said granulated product is greater than 0.5 mm to less than or equal to 5 mm,
   the amount of said granulated product of a porous ceramic within the interlocking block is 10 g to 95 g relative to 100 g of the interlocking block, and

the interlocking block has a bending strength of 3.0 MPa or greater, a water retention capability of 0.20 g/cm$^3$ or greater, and a bulk specific gravity of 1.7 g/cm$^3$ or less.

2. The interlocking block according to claim 1, wherein the porous ceramic is obtained by firing a mixture comprising at least one material selected from the group consisting of a slag, an organic sludge, diatomaceous earth and borosilicate glass, and a clay.

3. The interlocking block according to claim 2, wherein the mixture comprises a slag, an organic sludge and a clay.

**Patentansprüche**

1. Verklinkungsblock, umfassend ein granuliertes Produkt einer porösen Keramik und ein Zement, wobei:

das granulierte Produkt einer porösen Keramik Verbindungslöcher aufweist, die darin gebildet sind, wobei mindestens eines der Poren im Mikrometerbereich und Poren im Millimeterbereich miteinander verbunden sind, die Partikelgröße des granulierten Produkts größer als 0,5 mm und kleiner als oder gleich wie 5 mm ist, die Menge des granulierten Produkts einer porösen Keramik innerhalb des Verklinkungsblocks 10 g bis 95 g mit Bezug auf 100 g des Verklinkungsblocks ist, und der Verklinkungsblock eine Biegestärke von 3,0 MPa oder mehr, eine Wasserrückhaltefähigkeit von 0,20 g/cm$^3$ oder mehr und eine spezifische Schüttdichte von 1,7 g/cm$^3$ oder weniger aufweist.

2. Verklinkungsblock nach Anspruch 1, wobei die poröse Keramik erhalten wird durch das Brennen einer Mischung, umfassend mindestens ein Material, ausgewählt aus der Gruppe, bestehend aus einer Schlacke, einem organischen Schlamm, Diatomeenerde und Borsilikatglas und einem Ton.

3. Verklinkungsblock nach Anspruch 2, wobei die Mischung eine Schlacke, einen organischen Schlamm und einen Ton umfasst.

**Revendications**

1. Bloc à verrouillage réciproque comprenant un produit granulé d'une céramique poreuse et un ciment, dans lequel :

ledit produit granulé d'une céramique poreuse a des trous de connexion formés dans celui-ci, où au moins l'un des pores de l'ordre du micromètre et des pores de l'ordre du millimètre sont interconnectés mutuellement, la granulométrie dudit produit granulé est de plus de 0,5 mm à 5 mm ou moins, la quantité dudit produit granulé d'une céramique poreuse dans le bloc à verrouillage réciproque est de 10 g à 95 g pour 100 g du bloc à verrouillage réciproque, et le bloc à verrouillage réciproque a une résistance à la flexion de 3,0 MPa ou plus, une capacité de rétention d'eau de 0,20 g/cm$^3$ ou plus, et une masse volumique apparente de 1,7 g/cm$^3$ ou moins.

2. Bloc à verrouillage réciproque selon la revendication 1, dans lequel la céramique poreuse est obtenue par cuisson d'un mélange comprenant au moins un matériau choisi dans le groupe constitué par un laitier, une boue organique, de la terre de diatomées et un verre au borosilicate, et une argile.

3. Bloc à verrouillage réciproque selon la revendication 2, dans lequel le mélange comprend un laitier, une boue organique et une argile.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011147157 A
- JP 2007145669 A
- WO 2012036218 A1
- JP 2004299965 A
- JP 2005239467 A
- WO 10106724 A